(19) Europäisches Patentamt
European Patent Office
Office européen des brevets

(11) **EP 4 611 289 A1**

(12) **EUROPEAN PATENT APPLICATION**

(43) Date of publication:
**03.09.2025 Bulletin 2025/36**

(21) Application number: **24160459.4**

(22) Date of filing: **29.02.2024**

(51) International Patent Classification (IPC):
**H04L 1/00** (2006.01)    **H04L 45/24** (2022.01)

(52) Cooperative Patent Classification (CPC):
**H04L 1/0041;** H04L 2001/0096

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Airbus S.A.S.**
**31700 Blagnac (FR)**

(72) Inventor: **Klügel, Markus**
**82024 Taufkirchen (DE)**

(74) Representative: **OTN Airbus SAS**
**Airbus Defence and Space GmbH**
**Willy-Messerschmitt-Straße 1**
**82024 Taufkirchen (DE)**

(54) **ENCODING METHOD AND DECODING METHOD FOR A MULTIPLE LINK COMMUNICATION NETWORK AND ASSOCIATED DEVICES**

(57)    In order to improve communication networks (10) the invention proposes a computer-implemented encoding method for encoding an input data stream (28) for transmission from a transmitter coding point (14) using a plurality of data links (18). After segmenting the input data stream (28) into a plurality of data symbols (30) a link set $\mathcal{L}$ of transmission data links is randomly selected from all data links (18). The data symbols (30) are encoded by means of network coding. The encoded data symbol (38) is packetized into a data packet (40) together with decoding information and the randomly selected data links (18). The data packets (40) are sent each along one randomly selected data link (18).

**(Cont. next page)**

EP 4 611 289 A1

Fig. 1

**Description**

The invention relates to a computer-implemented encoding method and a complementary decoding method. The invention further relates to coding points and a communication network carrying out these methods. The invention still further relates to a computer program and a computer-readable storage medium.

Network coding is a field that has been widely investigated by the scientific communication technology community. An example for network coding is disclosed in J. K. Sundararajan, D. Shah, M. Medard, M. Mitzenmacher and J. Barros, "Network Coding Meets TCP," IEEE INFOCOM 2009, Rio de Janeiro, Brazil, 2009, pp. 280-288, doi: 10.1109/INFCOM.2009.5061931.

A special form of network coding, called random linear network coding (RLNC), is seen as most appropriate for actual implementation, due to its simplicity that allows efficient implementation. First commercial implementations for RLNC exist, for example the KODO library developed by Steinwurf ApS (https://www.steinwurf.com/kodo).

Network coding is done between devices called coding points, which are located on the sender, the receiver, or on a networking element in-between. Each coding point either encodes, decodes or recodes a data stream.

Encoded data may be distributed across several links towards the decoding point. In the closest related setup, network coding is implemented in an end-to-end fashion on the sender and receiver side, which are both connected via multiple parallel links, to allow more reliable transmissions.

However, network encoded links need to be configured to fit the exactly used setup, if it should be fully leveraged. Network coding parameters include the links on which the encoded data should be transmitted, coding symbol size and coding rate, among others. These parameters are typically statically assigned at the beginning of a communication session, or even in general. This results in a static setup that can not adapt to changing link conditions.

Network coding is a sub-field to communication technology in which data is encoded on the network layer to enhance user throughput or communication reliability. To do so, the data streams are encoded within the network elements (routers, switches, middle-boxes) to create extra redundancy or increase the overall information transported in the network. Network coding elements can be placed in small-scale networks (as are present for example within aircrafts) or over-the-top in a wide-area network such as the internet.

It is the object of the invention to improve network communication between coding points.

The object is achieved by the subject-matter of the independent claims. Preferred embodiments are subject-matter of the dependent claims.

The invention provides a computer-implemented encoding method for encoding an input data stream for transmission from a transmitter coding point through a communication network having a plurality of data links to a receiver coding point, the method comprising:

    a) segmenting the input data stream into a plurality of data symbols;
    b) randomly selecting a link set of transmission data links from all data links;
    c) generating configuration data based on the link set obtained in step b);
    d) encoding the data symbols by means of network coding based on the configuration data to obtain encoded data symbols and adding decoding information to the configuration data to generate control data, wherein the decoding information allows decoding of the encoded data symbols at the receiver coding point; and
    e) packetizing each encoded data symbol together with the control data into a data packet, wherein the control data causes the data packet to follow any of the transmission data links.

Preferably, in step b) the link set is randomly selected by assigning a drawing probability to each data link and by a random number generator generating a random number for each data link. Preferably, the respective data link is added to the link set, if the generated random number is smaller than or equal to the drawing probability assigned to that data link.

Preferably, the drawing probability is predetermined, preferable to be equal for all data links. Preferably, the drawing probability is set dynamically through an API. Preferably, the drawing probability for a particular data link is determined based on at least one link property of that data link. Preferably, the link property is indicative of the data packet loss, and the drawing probability increases with decreasing packet loss and vice versa. Preferably, the link properties such as link congestion, cost per data rates, etc.

Preferably, the drawing probability is chosen from an interval from 0 to 1, where endpoint 0, endpoint 1, or endpoints 0 and 1 are excluded.

Preferably, in step c) the configuration data includes any of an input symbol size, that is indicative of the number of symbols used as input for network coding; a coding rate, that is indicative of the fraction of the number of input symbols per the number of output symbols; and an output symbol size, that is indicative of the number of symbols output from the network coding.

Preferably, in step d) encoding is carried out by means of random linear network coding and/or by means of a codebook based method.

Preferably, the steps b) to e) are carried out asynchronously. Preferably, the steps b) to e) are carried out sequentially in the order b), c), d), e).

The invention provides a transmitting method for transmitting an input data stream from a transmitter coding point through a communication network having a plurality of data links to a receiver coding point, the method comprising:

> a) carrying out a preferred encoding method to obtain a data packet;
> b) with a transmitter, transmitting the data packet.

The invention provides a computer-implemented decoding method for decoding data packets received at a receiver coding point through a communication network having a plurality of data links to a transmitter coding point from that transmitter coding point, the method comprising:

> a) de-packetizing each received data packet to obtain an included encoded data symbol and control data;
> b) extracting configuration data and decoding information from the control data; and
> c) decoding the encoded data symbol into a data symbol based on the configuration data and the decoding information.

Preferably, before step a) a preferred encoding method or a preferred transmitting method according is carried out to obtain the data packets.

Preferably, step b) includes waiting for a predetermined waiting period for a number of encoded data symbols required for decoding or waiting for a maximum waiting period before commencing with step c).

The invention provides a transmitter coding point comprising means for carrying out a preferred encoding method or a preferred transmitting method.

The invention provides a receiver coding point comprising means for carrying out a preferred decoding method.

The invention provides a communication network comprising at least one transmitter coding point and at least one receiver coding point, wherein the transmitter coding point and the receiver coding point are connected through a plurality of data links.

The invention provides a computer program comprising instructions which, when executed by a suitable configured coding point, cause the coding point to carry out a preferred method.

The invention provides a computer-readable storage medium comprising the computer program.

A coding point is considered that can change its parameters, i.e. its configuration, dynamically. It is an idea to split a data stream into independent symbols that are each encoded differently. For each symbol, a set of transmission links can be chosen for transmission according to a probability distribution and then the symbol is encoded based on the considered links. By changing the probability with which a link is chosen for transmission, the traffic can be dynamically balanced across different links, in a more fine-granular and adaptive fashion than would be possible otherwise.

An advantage of the disclosed approach is that the coding point becomes configurable in a more fine-granular fashion. It can be adapted to changing link properties and to changing cost per data rates on each link and can therefore reduce the amount of transmitted data or transmission cost. Mathematically, it can be shown that by choosing the involved links randomly for each symbol, a best configuration can be calculated more easily, as the related problems turn from a combinatorial/integer problem into a continuous one. The coding point can also run in a "legacy mode", in which certain links are chosen with 100% probability, which generates a static setup as typically used in the state of the art.

In a general setup at least two coding points are connected via a plurality of N logical data links. The logical links can be abstracted from the lower-layer data transport, i.e., the data on each link can travel over multiple communication hops, each of which can use a different technology (wired ethernet / optical, WiFi, LTE, Satcom, etc.).

The paths used by each data link may, but don't have to, be disjoint. The transmitter coding point (TX) takes a data stream as input, that may originate from an application on socket-level, or from a data stream aggregated from one or several input ports, e.g., if the coding point resides on a networking hardware (switch/router). The TX coding point buffers the input stream, segments the data into symbols and applies a network code on them, for example a random linear network code (RLNC).

In the encoding process the coding point recombines K input symbols to create L encoded symbols, where $L > K$. It is then said that the code has a coding rate of $R = K/L$. The encoded symbols are transmitted over the different links, where some of them may be lost or corrupted and dropped.

The receiver coding point (RX) receives a subset of the encoded symbols, as some of them may be lost, and applies a decoding algorithm on the received symbols to recover the original data. Recovery is (depending on the code) successful when K out of L symbols are received. The recovered data is then forwarded to the output port, which could again be a software socket or an output on the networking hardware.

The encoder CP consists of a random link decision (RLD) routine, a configurator routine (CON), an encoding routine (ENC) and a packetizer routine (PACK). In the invention, not all outgoing links have to be used all the time. The RLD can regularly draw the links to use for each encoding cycle randomly according to a given routine. In the simplest case, the RLD is given probabilities $p_i$, where i is an index by which all links are labeled, and decides to draw each link independently according to its probability. The decision routine, or the probabilities, may be predetermined, or may be dynamically adapted via an application programming interface (API).

Once the decision on the links has been made, a configuration is determined by the CON routine. In some embodiments, the configuration consists of a field size, a generation size K and a coding rate R (note that the output symbol number L = K/R by definition of R). However, in some realizations the CON may also determine the used coding algorithm itself, the underlying mathematical field, which defines the exact form of the encoding operations, or similar.

The ENC routine accepts the configuration, takes a set of symbols from the input and produces a set of encoded symbols, as defined by the configuration. The encoded symbols are handed to the PACK routine, which creates network packets from the encoded symbols. The packets may include control information such as the target address of the packet, the used codebook for encoding, identifiers for the symbols included in the packet, or similar. Packing will follow a predefined packet format, e.g., it could follow the one proposed by J. Heide et al., "Random Linear Network Coding (RLNC)-Based Symbol Representation" obtainable at https://datatracker.ietf.org/doc/html/draft-heide-nwcrg-rlnc-00 the contents of which are incorporated herein by reference, specifically Section 3 - Symbol Representation.

Packing also may include load balancing, i.e., deciding how many of the symbols are sent over each link. Therefore, the PACK routine requires input from the RLD to know which links are used, as well as from the CON routine, to create the right control information. Finally, the PACK routine forwards the created packets to the correct output ports.

The decoder CP comprises the counterparts of the encoder, namely a depacketizer routine (DE-PACK), a configuration extraction routine (CON-E) and a decoder routine (DEC).

The DE-PACK receives the packets sent by the PACK routine of the encoding CP and separates the control information from the encoded symbols. Both the control information and the encoded symbols are handed over to the CON-E.

The CON-E routine takes the control information and buffers the encoded symbols and determines from the control information which configuration was used. Once sufficiently many encoded symbols are present, the CON-E passes the configuration and encoded symbols to the DEC.

The DEC uses the configuration and the encoded symbols to decode the data, which is finally forwarded out of the decoder.

Finally, the API can be used by an optimization routine (OPT). The OPT routine may take external knowledge (packet losses, link rates, delays, etc.) and may adapt the behavior of the RLD routine (e.g. by changing the link probabilities $p_i$) when necessary or on a regular basis.

Embodiments of the invention are described in more detail with reference to the accompanying schematic drawings that are listed below

Fig. 1    depicts an embodiment of a communication network;

Fig. 2    depicts an embodiment of a transmitter coding point; and

Fig. 3    depicts an embodiment of a receiver coding point.

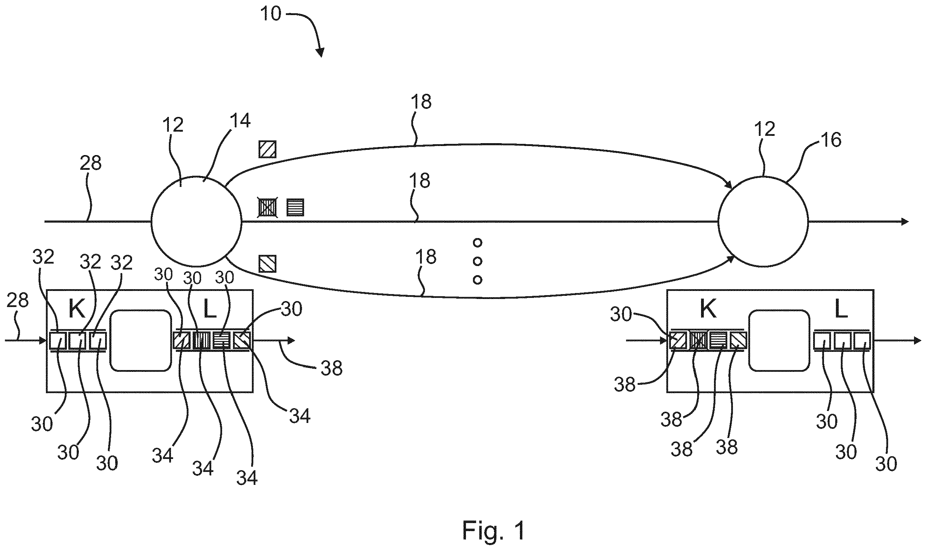

Referring to Fig. 1, an embodiment of a communication network 10 is illustrated. The communication network 10 comprises a plurality of coding points 12. At least one coding point 12 is configured as a transmitter (TX) coding point 14 and at least one coding points 12 is configured as a receiver (RX) coding point 16. The coding points 12 are connected through a plurality of data links 18. Each data link 18 can be uniquely indexed, e.g., with a number i = 1, 2, ..., N.

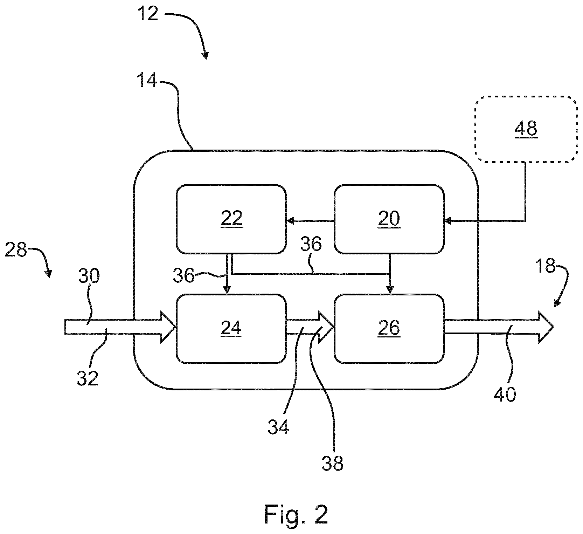

Referring to Fig. 1 and Fig. 2, an embodiment of the operation of the transmitter coding point 14 is described in more detail. The transmitter coding point 14 comprises a random link decision (RLD) routine 20, a configuration (CON) routine 22, an encoding (ENC) routine 24, and a packetizer (PACK) routine 26.

A data stream 28 is fed to the transmitter coding point 14. The transmitter coding point 14, e.g., the ENC routine 24 segments the data stream 28 into a plurality of data symbols 30.

The ENC routine 24 is configured for network coding by means of a random linear network coding (RLNC) code over a finite field of size $2^8$ (i.e., the finite field $FF(2^8)$). Each byte of data can be interpreted as a polynomial of eighth degree. Addition, multiplication and division operations are performed according to the binary extension field $x^8 + x^4 + x^3 + x^2 + 1$.

In this embodiment, the transmitter coding point 14 is connected through four independent data links 18 to the receiver coding point 16. Each data link 18 has a predetermined drawing probability of $p_1 = p_2 = p_3 = p_4 = 0.5$. The RLNC code, field size and probabilities are predetermined and static. In other words, these parameters are not dynamically changed during operation.

The CON routine 22 determines a required number K of input data symbols 32. The number K is also known as generation size K and is indicative of the number of data symbols 30 that are needed as input data symbols 32 before generating a number of L output data symbols 34. The CON routine 22 may choose L strictly greater than K or a coding rate R from 0 to 1. The coding rate R is defined as R := K/L.

The RLD routine 20 generates a random number for each of the data links 18. The random number is generated from a uniform distribution out of the interval [0, 1]. The RLD routine 20 may generated the random number by means of a pseudo-random number generator or a true random number generator, that is typically implemented as a hardware addition.

If the RLD routine 20 determines the random number to be lower than or equal to the drawing probability $p_i$ of the respective data link 18, that data link 18 is added to a link set $\mathcal{L}$ of transmission data links. Otherwise, the respective data link 18 is disregarded for this cycle. The link set $\mathcal{L}$ is passed to the CON routine 22.

The CON routine 22 takes the link set $\mathcal{L}$ and depending on the size $|\mathcal{L}|$ of the link set $\mathcal{L}$, configuration data 36 is created in the following fashion:

a. If $|\mathcal{L}| \leq 2$, the CON routine 22 sets $K = |\mathcal{L}|$ and $R = 1$,

b. If $|\mathcal{L}| \geq 3$, the CON routine 22 sets $K = 2$ and $R = 2/|\mathcal{L}|$.

These conditions can be summarized by setting $K = \min\{|\mathcal{L}|, 2\}$ and $R = K/|\mathcal{L}|$. The CON routine 22 now passes the number K of input data symbols 32 and the coding rate R to the ENC routine 24. The ENC routine 24 accepts (K, R) from the CON routine 22 and generally waits for K input data symbols 32 to be passed from the input buffer and creates $L = K/R = |\mathcal{L}|$ encoded data symbols 38 from it. The encoded data symbols 38 and the necessary decoding information are passed to the PACK routine 26. The decoding information is necessary, but also sufficient, to decode the encoded data symbols 38 at the receiver coding point 16. The decoding information, in the case of RLNC, includes the coding coefficients that were used to generate the encoded data symbols 38.

The PACK routine 26 takes the L encoded data symbols 38, the decoding information (e.g., the coding coefficients), the link set $\mathcal{L}$ and the parameters (K,R) as input. The PACK routine 26 uses the coding information and (K, R) to create control data for the receiver coding point 16.

Also, the PACK routine 26 packs each encoded data symbol 38 into an own data packet 40. Each data packet 40 is transmitted through one of the transmission data links in the link set $\mathcal{L}$, preferably in a way that each transmission data link also carries exactly one data packet 40.

Depending on the implementation, these can be carried out in a sequential manner. In the sequential operation, the RLD routine 20 chooses a link set $\mathcal{L}$ whenever the PACK routine 26 is finished with the previous encoding cycle, and then re-run the steps.

It is also possible for each routine to run asynchronously. Asynchronous operation means that the RLD routine 20 draws for each and all data links 18 in regular predetermined time intervals, that the CON routine 22 updates the configuration data whenever a link set $\mathcal{L}$ has been passed, and correspondingly so do the ENC routine 24 and the PACK routine 26.

The transmitter coding point 14 may include an optimizer (OPT) routine 48. The OPT routine 48 may measure different link properties of each data link 30. The link properties are typically indicative of the reliability and/or quality of the data transmission along a specific data link 30. The link properties include, for example, packet loss, cost per data rate, delay, etc. In a variation of the previously described operation, the OPT routine 48 may set the parameters, such as K, L/R, drawing probability in accordance with the link properties. In general, the drawing probability is increase, if a desired link property increases and the drawing probability is decreased if an undesired link property increases.

After the encoding is complete, the corresponding data packets 40 are transmitted to the receiver coding point 16.

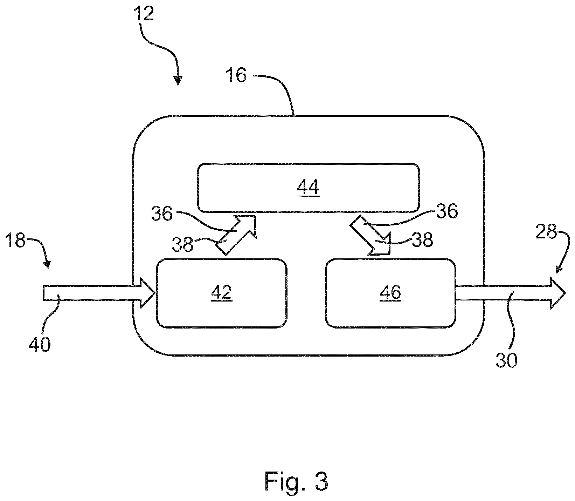

Referring to Fig. 1 and Fig. 3 an embodiment of the operation of the receiver coding point 16 is described in more detail. The receiver coding point 16 includes a depacketizer (DE-PACK) routine 42, a configuration extraction (CON-E) routine 44, and a decoding (DEC) routine 46.

The DE-PACK routine 42 accepts each data packet 40, no matter from which data link 18 it came. The DE-PACK routine 42 splits the data packet 40 into control data and encoded data symbols 38. The control data and the encoded data symbols 38 are forwarded to the CON-E routine 44.

The CON-E routine 44 interprets the control data and extracts the configuration data and the decoding information. Specifically, the CON-E routine 44 extracts the (K, R) and the coding coefficients for each encoded data symbol 38. The CON-E routine 44 may wait for a certain predetermined time to receive all encoded data symbols 38 that are necessary for decoding. The wait time may have a defined maximum waiting time. The CON-E routine 44 passes the configuration data, the decoding information and the received encoded data symbols 38 to the DEC routine 46.

The DEC routine 46 sets its configuration according to the configuration data received from the CON-E routine 44. The DEC routine 46 accepts the encoded data symbols 38 and decoding information and attempts to decode the original data symbols 30. If the DEC routine 46 succeeds, the decoded data symbols 30 are sent to the output port.

In the following, the description gives considerations which show in which sense the disclosed methods are able to outperform network coding according to the prior art.

As mentioned before, a key added property is that the disclosed methods are more adaptive and can better be optimized than state-of-the-art solutions, in which the outgoing links and the coding configurations remain fixed. In particular, consider for comparison a static network coding point in which the link set $\mathcal{L}$ for outgoing links, as well as (K, R) are predetermined and fixed.

It is observed that the disclosed methods can easily be adapted to behave like a static network coding solution by setting $p_i = 1$ for all links that are in the link set

$\mathcal{L}$ of the static solution and $p_i = 0$ for those that are not such that the CON routine 22 assigns a fixed configuration (K,R) to the links.

Furthermore, the two performance parameters of throughput and symbol error rate should be considered. Here, each static configuration can be described by the triple C = ($\mathcal{L}$ ,K,R), which is one configuration taken out of a set $\mathcal{C}$ of possible configurations. In the static case, the configuration C remains fixed and the average throughput $TP_{static}$ transported over each data link 30 can be calculated from the injected throughput $TP_{in}$ by:

$$TP_{static} = TP(C) = Tpin \cdot K/|\mathcal{L}| = TP_{in} \cdot R(C)$$

On the other hand, the average throughput according to the disclosed invention, $TP_{inv}$, is given as the average of the throughputs TP(C) that would be achieved by each configuration C = ($\mathcal{L}$ ,K,R), weighted by the probability $\alpha_C$ that a data symbol 30 is encoded using the configuration C:

$$TP_{\text{inv}} = \sum_{C \in \mathcal{C}} \alpha_C TP(C) = TP_{\text{in}} \sum_{C \in \mathcal{C}} \alpha_C R(C)$$

Because according to the invention it is possible to behave like a static configuration, $TP_{static}$ is also one of the TP(C) on the middle term. Therefore, it can be seen that the possible throughputs $TP_{inv}$ according to the invention form what is called the "convex hull" of all possible $TP_{static}$. That is, $TP_{inv}$ can take values in between all possible $TP_{static}$ and therefore can be more fine granularly tuned.

Similarly, one can argue for the packet error rate. In network coding, symbol errors occur, when from a generation, not sufficiently many encoded data symbols 38 are received to decode the original data symbols 30. This is particularly the case, when less than K out of L symbols are received, while it is not important which K symbols exactly were received.

When L symbols are transmitted over different data links 18, there is a finite amount of combinations on which data link 18 a data symbol 30 can be lost. Let b $\in$ $\{0,1\}^L$ denote a pattern describing which data symbol 30 was received, with "1" representing that it was received and "0" denoting that it was not, and let |b| denote the number of ones in b, i.e., the number of received symbols.

Then, given C = ($\mathcal{L}$ ,K,R) $\in$ $\mathcal{C}$ , there is a probability $v_b$(C) that the pattern b will be observed. From this, the probability that a generation of symbols is correctly received can be calculated as:

$$\eta(C) = \sum_{|b| \geq K} v_b(C)$$

Therefore, the symbol error rate of a static configuration can be calculated as $\eta_{static} = \eta(C)$, with C defined as above. On the other hand, the symbol error rate of the invention is given by

$$\eta_{\text{inv}} = \sum_{C \in \mathcal{C}} \alpha_C \eta(C)$$

Again, it can be seen that the error rates in the invention form the convex hull of that of a static system. Finally, when coming to optimization of the configuration, the invention also has some advantages. Optimization of a fixed configuration often leads to combinatorial problems, due to the parameters $\mathcal{L}$ , K and R being taken from discrete sets. On the other hand, in the invention the optimization goes towards optimizing the probabilities $\alpha_C$, which are from continuous sets. This allows the consideration as continuous problems which typically are easier to solve.

**List of reference signs:**

| | |
|---|---|
| 10 | communication network |
| 12 | coding point |
| 14 | transmitter (TX) coding point |
| 16 | receiver (RX) coding point |
| 18 | data link |
| 20 | random link decision (RLD) routine |
| 22 | configuration (CON) routine |
| 24 | encoding (ENC) routine |
| 26 | packetizer (PACK) routine |
| 28 | data stream |
| 30 | data symbol |
| 32 | input data symbol |
| 34 | output data symbol |
| 36 | configuration data |
| 38 | encoded data symbol |
| 40 | data packet |
| 42 | depacketizer (DE-PACK) routine |
| 44 | configuration extraction (CON-E) routine |
| 46 | decoding (DEC) routine |
| 48 | optimizer (OPT) routine |

$\mathcal{L}$     link set

**Claims**

1. A computer-implemented encoding method for encoding an input data stream (28) for transmission from a transmitter coding point (14) through a communication network (10) having a plurality of data links (18) to a receiver coding point (16), the method comprising:

a) segmenting the input data stream (28) into a plurality of data symbols (30);

b) randomly selecting a link set $\mathcal{L}$ of transmission data links from all data links (18);
c) generating configuration data (36) based on the link set $\mathcal{C}$ obtained in step b);
d) encoding the data symbols (30) by means of network coding based on the configuration data (36) to obtain encoded data symbols (38) and adding decoding information to the configuration data (36) to generate control data, wherein the decoding information allows decoding of the encoded data symbols (38) at the receiver coding point (16); and
e) packetizing each encoded data symbol (38) together with the control data into a data packet (40), wherein the control data causes the data packet (40) to follow any of the transmission data links.

2. The encoding method according to claim 1, wherein in step b) the link set $\mathcal{L}$ is randomly selected by assigning a drawing probability to each data link (18) and by a random number generator generating a random number for each data link (18), wherein the respective data link (18) is added to the link set $\mathcal{L}$, if the generated random number is smaller than or equal to the drawing probability assigned to that data link (18).

3. The encoding method according to claim 2, wherein the drawing probability is predetermined, preferable to be equal for all data links (18); and/or wherein the drawing probability is set dynamically through an API; and/or wherein the drawing probability for a particular data link (18) is determined based on at least one link property of that data link (18).

4. The encoding method according to any of the preceding claims, wherein in step c) the configuration data (36) includes any of an input symbol size, that is indicative of the number of symbols used as input for network coding; a coding rate, that is indicative of the fraction of the number of input symbols per the number of output symbols; and an output symbol size, that is indicative of the number of symbols output from the network coding.

5. The encoding method according to any of the preceding claims, wherein in step d) encoding is carried out by means of random linear network coding and/or by means of a codebook based method.

6. The encoding method according to any of the preceding claims, wherein the steps b) to e) are carried out asynchronously or sequentially in the order b), c), d), e).

7. A transmitting method for transmitting an input data stream (28) from a transmitter coding point (14) through a communication network (10) having a plurality of data links (18) to a receiver coding point (16), the method comprising:

a) carrying out an encoding method according to any of the preceding claims to obtain a data packet (40);
b) with a transmitter, transmitting the data packet (40).

8. A computer-implemented decoding method for decoding data packets (40) received at a receiver coding point (16) through a communication network (10) having a plurality of data links (18) to a transmitter coding point (14) from that transmitter coding point (14), the method comprising:

a) de-packetizing each received data packet (40) to obtain an included encoded data symbol (38) and control data;
b) extracting configuration data (36) and decoding information from the control data; and
c) decoding the encoded data symbol (38) into a data symbol (30) based on the configuration data (36) and the decoding information.

9. The decoding method according to claim 8, wherein before step a) an encoding method according to any of the claims 1 to 6 or a transmitting method according to claim 7 is carried out to obtain the data packets (40).

10. The decoding method according to claim 8 or 9, wherein step b) includes waiting for a predetermined waiting period for a number of encoded data symbols (38) required for decoding or waiting for a maximum waiting period before commencing with step c).

11. A transmitter coding point (14) comprising means for carrying out an encoding method according to any of the claims 1 to 6 or a transmitting method according to claim 7.

12. A receiver coding point (16) comprising means for carrying out a decoding method according to any of the claims 8 to 10.

13. A communication network (10) comprising at least one transmitter coding point (14) according to claim 11 and at least one receiver coding point (16) according to claim 12, wherein the transmitter coding point (14) and the receiver coding point (16) are connected through a plurality of data links (18).

**EP 4 611 289 A1**

14. A computer program comprising instructions which, when executed by a suitable configured coding point (12), cause the coding point (12) to carry out a method according to any of the claims 1 to 10.

15. A computer-readable storage medium comprising the computer program of claim 14.

Fig. 1

Fig. 2

Fig. 3

**EUROPEAN SEARCH REPORT**

Europäisches Patentamt
European Patent Office
Office européen des brevets

Application Number

EP 24 16 0459

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ENGELMANN ANNA ET AL: "Exploiting Parallelism With Random Linear Network Coding in High-Speed Ethernet Systems", IEEE /ACM TRANSACTIONS ON NETWORKING, IEEE / ACM, NEW YORK, NY, US, vol. 26, no. 6, 1 December 2018 (2018-12-01), pages 2829-2842, XP011700849, ISSN: 1063-6692, DOI: 10.1109/TNET.2018.2852562 [retrieved on 2018-12-13] * sections III, IV-A, V * | 1-15 | INV. H04L1/00 H04L45/24 |
| A | CN 113 301 079 A (ALIBABA GROUP HOLDING LTD) 24 August 2021 (2021-08-24) * the whole document * | 1-15 | |
| A | ALEJANDRO COHEN ET AL: "Bringing Network Coding into SDN: A Case-study for Highly Meshed Heterogeneous Communications", ARXIV.ORG, CORNELL UNIVERSITY LIBRARY, 201 OLIN LIBRARY CORNELL UNIVERSITY ITHACA, NY 14853, 1 October 2020 (2020-10-01), XP081775708, * the whole document * | 1-15 | TECHNICAL FIELDS SEARCHED (IPC) H04L |

The present search report has been drawn up for all claims

| Place of search | Date of completion of the search | Examiner |
|---|---|---|
| Munich | 11 July 2024 | Stolte, Norbert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 0459

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2024

| Patent document cited in search report | Publication date | Patent family member(s) | Publication date |
|---|---|---|---|
| CN 113301079 A | 24-08-2021 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. K. SUNDARARAJAN** ; **D. SHAH** ; **M. MEDARD** ; **M. MITZENMACHER** ; **J. BARROS**. Network Coding Meets TCP. *IEEE INFOCOM 2009, Rio de Janeiro, Brazil*, 2009, 280-288

- **J. HEIDE et al.** *Random Linear Network Coding (RLNC)-Based Symbol Representation*, https://data-tracker.ietf.org/doc/html/draft-heide-nwcrg-rlnc-00